# EUROPEAN PATENT SPECIFICATION

(11) **EP 0 418 619 B1**
(45) Date of publication and mention of the grant of the patent: **07.12.1994**
(21) Application number: 90116764.3
(22) Date of filing: 31.08.1990
(51) Int. Cl.: B23B 27/14

(54) **Throw away insert**
Schneideinsatz
Plaquette de coupe

(30) Priority: 31.08.1989 JP 102495/89
(43) Date of publication of application: 27.03.1991
(73) Proprietor: SUMITOMO ELECTRIC INDUSTRIES, LTD., Osaka-shi, Osaka 541 (JP)
(72) Inventor: Takahashi, Nobuhiro, Itami Works of, Itami-shi, Hyogo (JP)
(74) Representative: Glawe, Delfs, Moll & Partner

(56) References cited:
- EP-A- 318 000
- EP-A- 0 345 560
- FR-A- 2 223 122

## Description

This invention relates to a throw away insert as defined in the preamble of claim 1, cf US-A-4846609, and more specifically an improvement in chip breaker for smooth chip disposal in a region between the medium cutting region and the heavy cutting region.

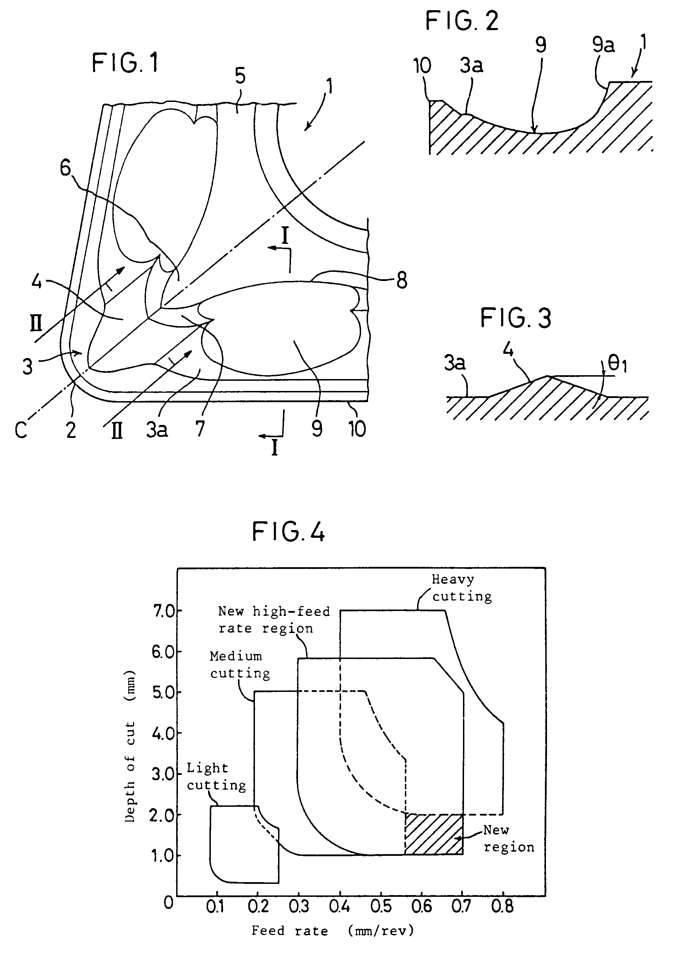

In cutting operations, it is extremely important to break and discharge the chips smoothly for better workability. To achieve this, various chip breakers have been developed. It has been a common practice to contemplate three cutting regions, i.e. those for light cutting, medium cutting and heavy cutting according to the cutting conditions (cutting speed, feed rate, and depth of cut) as shown in Fig. 4 and develop a chip breaker suited for each cutting region. But because of a lower depth of cut due to improvements in dimensional accuracy of the material and of an increased feed rate, new cutting regions, which are not covered by any of the abovesaid cutting regions, tend to appear.

These new regions are two regions which, in a new high-feed rate region shown in Fig. 4, do not overlap the medium cutting region nor the heavy cutting region.

The more important among the two regions is the one having a higher feed rate than the medium cutting region and a smaller depth of cut than the high cutting region, that is, the hatched region in Fig. 4. This is because the chips produced in this region tend to be thicker and more difficult to break. Thus the development of a chip breaker which is effective for this new region has been expected.

Prior art throw away inserts disclosed in Japanese Examined Utility Model Publications 57-30004 and 1-15442 can be used in both the light cutting region and the medium one. But these inserts have the following problems.

While the depth of cut is small enough to be within the nose radius, the chips are discharged substantially in the direction of bisector of the nose angle. It is well known that as the depth of cut increases, the direction in which the chips are discharged approaches the direction in which the straight portion of the cutting edge extends (opposite to the feed direction).

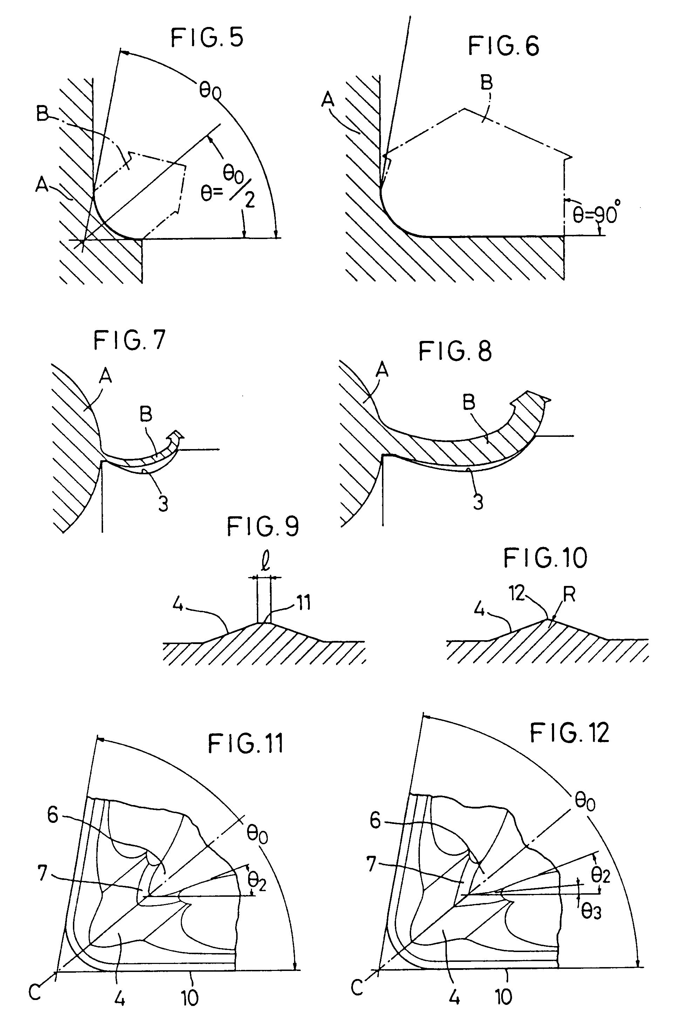

For the new high-feed rate region where the depth of cut is 1 - 5 mm and the feed rate is 0.3 - 0.7 mm/rev., an insert having a nose radius of 1.2 - 1.6 mm is ordinarily used. In such a case, as the depth of cut increases, the chip discharge angle ϑ will change from the state shown in Fig. 5 where the depth of cut is small (1 - 2 mm) to the state shown in Fig. 6 where it is large (4 - 5 mm).

For a medium feed rate (f = 0.3 - 0.4 mm/rev.), a narrower chip breaker as shown in Fig. 7 is preferable, whereas for a high feed rate, a wider chip breaker as shown in Fig. 8 is effective because the chips produced in such a state tend to be thick and difficult to break.

Since, as described above, the direction in which the chips are discharged changes with the depth of cut and the optimum width of chip breaker changes with the feed rate, it was very difficult to design a chip breaker which can be used not only in the conventional cutting regions but also in the new regions where the depth of cut is small and the feed rate is high.

The throw away inserts disclosed in the abovementioned publications are both provided in a breaker groove formed near each corner with a protrusion extending toward the tip of the nose to expand the chip disposable region. But because such a protrusion narrows the width of the chip breaker, it tends to cause chip clogging at high feed rate. Thus, with these inserts, the cutting area can be expanded from the low cutting region toward the medium one to some extent. But they cannot be used in the heavy cutting region where the feed rate is high.

It is an object of the present invention to provide a throw away insert having a chip breaker which allows the insert to be used in the new region shown in Fig. 4.

In accordance with the present invention, there is provided a throw away insert having the features defined in claim 1.

With the throw away insert according to the present invention, the chip discharge angle changes according to the cutting conditions, so that the relative breaker width (the distance between the point where chips form and the point where chips collide) can be adjusted to optimum value. Such conditions are described below more specifically.

### [while the depth of cut is small (d = 1.0 - 2.0 mm)]

While the feed rate is within an ordinary range (f = 0.3 - 0.4 mm/rev.), chips formed near a nose 2 show a tendency to flow out into a line C. But, due to the guiding effect of slopes 4 formed at the front side with respect to the direction of feed, their discharge angle will reduce gradually until they collide against breaker walls 7 provided ahead of a breaker protrusion. The chips then curl and get broken.

While the feed rate is high (f = 0.5 - 0.7 mm/rev.), the chips are guided by the slopes 4 in the same manner, colliding the breaker walls 7. But because the chips are rather thick and difficult to break in this case, they are guided along the walls 7 so as to flow into grooves 9 continuous with the terminal ends of the walls 7. The chips are broken when subjected to strain by a convexed surface 9a of each groove 9 near a center land (Fig. 2). Accordingly, the chips formed while the feed rate is high is curled with a larger radius of curvature than the chips formed during normal feed rate. This makes it possible to discharge even thick chips smoothly and thus to prevent clogging with chips.

### [while the depth of cut is large (d = 4 - 5 mm)]

While the feed rate is within an ordinary range (f = 0.3 - 0.4), due to smaller guiding action by the slopes 4, the chip discharge angle is only slightly smaller than the angle shown in Fig. 6, i.e. 90 degrees. Anyhow, the chips are curled and broken by colliding against the breaker walls 7 provided ahead with respect to the direction of feed.

When the feed rate is high (f = 0.5 - 0.7), thicker chips show a stronger tendency to flow along the surface of the insert than thin ones. Thus the slopes 4 have a stronger guiding effect while the feed rate is high. Accordingly, the chips are curled mainly on the concave 9a of the groove 9. This serves to increase the relative breaker width, thus allowing the chips to smoothly curl and break.

By the combined action of the slopes 4, the breaker walls 7 of the breaker protrusion and the ellipsoidal grooves 9, chips can be disposed according to the cutting conditions. Thus the throw away insert according to the present invention can cover not only the new high-feed rate region shown in Fig. 4, but also other new regions which are expected to increase more and more.

With the throw away insert according to this invention, by suitably combining the slopes formed in the breaker groove near the nose to form a ridge, the breaker protrusion continuous with the slopes and the ellipsoidal grooves, thinner chips which are produced while the feed rate is low, can be disposed when they collide against the breaker walls provided at the tip of the breaker protrusion, whereas thicker ones, which are produced while the feed rate is high, can be disposed in the ellipsoidal grooves provided ahead of the breaker walls with respect to the direction of discharge. This makes it possible to discharge chips without the fear of clogging. Also, smooth cutting operation becomes possible in the new high-feed rate region including the region where the depth of cut is small and the feed rate is high.

Other features and objects of the present invention will become apparent from the following description taken with reference to the accompanying drawings, in which:
Fig. 1 is a plan view of a portion of the first embodiment;
Fig. 2 is a sectional view taken along line I-I of Fig. 1;
Fig. 3 is a sectional view taken along line II-II of Fig. 1;
Fig. 4 is a graph showing the regions which the insert of the first embodiment can cover;
Figs. 5 and 6 are plan views showing the chip discharge directions when the depth of cut is small and large, respectively;
Figs. 7 and 8 are sectional views showing how the chips are discharged when the feed rate is low and high, respectively;
Figs. 9 and 10 are sectional views showing modified ridges; and
Figs. 11 and 12 are plan views of other embodiments have modified breaker protrusions.

Fig. 1 shows the preferred embodiment of the throw away insert according to this invention. Its basic structure is as described above. The slopes 4 of this throw away insert 1 should be inclined at an angle of 5° ≦ ϑ₁ ≦ 20°. If the angle of inclination is less than 5 degrees, the effect of adjusting the chip discharge angle may be insufficient while the feed rate is low. If it is more than 20 degrees, the chips will not flow smoothly while the feed rate is high and the depth of cut is large.

Figs. 9 and 10 show different types of ridges defined by the slopes 4. As shown in Fig. 9 by providing a flat portion 11 along the top edge of the ridge, when the depth of cut is small (d = 1.0 mm), the chips will flow on the line C, not affected by the slope 4, and abut the breaker walls 7 taking the shortest course. Thus the chips can easily curl and break. The flat portion 11 should have a width of preferably 0.1 - 0.2 mm. If it is too narrow, it will not be effective wheres if too wide, the area of the slope 4 will unduly decrease.

As shown in Fig. 10, the ridge may be formed along its top edge with a curved surface 12 having a radius of curvature R of 0.2 - 0.5 mm. It has the same function as the flat portion 11.

In order to guide thicker chips into the ellipsoidal grooves 9, the breaker protrusion 6 should have its tip tapered so that the breaker walls 7 will form a given angle with respect to the straight portion 10 of each cutting edge, as shown in Fig. 1.

To achieve this, the breaker protrusion 6 shown in Fig. 11 has its tip curved with a radius of curvature of 0.2 - 0.5 mm and is formed with ridge lines continuous with the tip and extending at an angle of ϑ₂ with respect to the straight edges 10 (its range is preferably ${\text{1° ≦ ϑ₂ < ϑ}}_{\text{0/2}}$ _{).}

The breaker protrusion 6 shown in Fig. 12 has a point angle which is smaller by 2·ϑ₃) than the angle ϑ₀ and is provided with ridge lines extending at an angle ϑ₂ (> ϑ₃) with respect to the straight cutting edges 10.

The ellipsoidal grooves 9 open to both breaker groove bottoms 3a and the breaker walls 7. In the embodiment shown in Fig. 1, the grooves 9 are provided so that the intersecting lines between the groove surfaces and the top surface will form ridge lines 8 extending along the grooves.

## Claims

1. A throw away insert having
a cutting edge (10),
noses (2) formed on said insert,
a center land (5),
a breaker groove (3) formed between said cutting edge (10) and said center land (5),
breaker protrusions (6) extending from said center land toward each of said noses (2) and having a tapered end (9a),
breaker walls (7) ahead of said breaker protrusions (6), and
an elevation formed in said breaker groove (3) near each of said noses (2) of said insert,
**characterized** in that
ellipsoidal grooves (9) are formed in the bottom (3a) of said breaker groove (3) so as to be continuous with said breaker walls (7),
said elevation comprises a pair of slopes (4) extending obliquely in a symmetrical relation with each other and with respect to the bisector of the nose (2) to form a ridge between the slopes (4),
said ridge extending along the bisector, and
each slope (4) forms an angle of inclination of 5-20 degrees with respect to a main plane of the insert.

2. A throw away insert as claimed in claim 1, wherein said ridge is formed along its top edge with a narrow flat portion.

3. A throw away insert as claimed in claim 1, wherein said ridge is formed along its top edge with a curved surface having a small radius of curvature.

4. A throw away insert as claimed in any of claims 1 - 3, wherein said protrusion has a tip having a small radius of curvature and is formed with ridge lines continuous with said tip and extending at an angle of ϑ₂( = 1° ∼ 1/2 of the nose angle) with respect to the straight portion of said cutting edge.

5. A throw away insert as claimed in any claims 1 - 3, wherein said each breaker protrusion has a point angle smaller than the nose angle by 2·ϑ₃(ϑ₃ = -5 ∼ 10°) and is formed with ridge lines continuous with its tip and extending at an angle of ϑ₂( > ϑ₃) with respect to the straight portion of said cutting edge.

## Patentansprüche

1. Schneideinsatz mit
einer Schneidkante (10),
Nasen (2), die im Einsatz ausgebildet sind,
einem zentralen Rücken (5),
einer Brechernut (3), die zwischen der Schneidkante (10) und dem zentralen Rücken (5) ausgeformt ist, Brechervorsprüngen (6), die sich vom zentralen Rücken aus auf die Nasen (2) zu erstrecken und ein konisches Ende (9a) haben,
Brecherwandungen (7) vor den Brechervorsprüngen (6) und einer Erhebung, die in der Brechernut (3) in der Nähe der Nasen (2) des Einsatzes ausgeformt ist,
dadurch **gekennzeichnet,** daß
elipsoidische Nuten (6) im Boden (3a) der Brechernut (3) so ausgebildet sind, daß sie in die Brecherwandungen (7) übergehen,
die Erhöhung ein Paar von Schrägen (4) aufweist, die sich geneigt symmetrisch zueinander bezüglich der Mittelhalbierenden der Nase (2) erstrecken, um zwischen den Schrägen (4) einen Grat auszubilden, wobei sich der Grat längs der Mittelhalbierenden erstreckt, und jede Schräge (4) einen Winkel mit einer Neigung von 5-20 Grat zur Hauptebene des Einsatzes bildet.

2. Schneideinsatz nach Anspruch 1,
wobei der Grat entlang seiner Oberkante mit einem schmalen flachen Teil ausgebildet ist.

3. Schneideinsatz nach Anspruch 1,
wobei der Grat längs seiner Oberkante mit einer gekrümmten Fläche mit einem kleinen Krümmungsradius ausgebildet ist.

4. Schneideinsatz nach einem der Ansprüche 1 bis 3, wobei der Vorsprung eine Spitze hat mit einem schmalen Krümmungsradius und ausgebildet ist mit Gratlinien, die in die Spitze übergehen und sich unter einem Winkel von ϑ₂ (= 1° bis 1/2 des Nasenwinkels) bezüglich des graden Teils der Schneidkante erstrecken.

5. Schneideinsatz nach Anspruch 1 bis 3,
wobei jeder der Brechervorsprünge einen Spitzenwinkel hat, der um 2 · ϑ₃ (ϑ₃ = -5 bis 10°) schmaler ist als der Nasenwinkel, und ausgebildet ist mit Gratlinien, die in seine Spitze übergehen und sich unter einem Winkel von ϑ₂ (> ϑ₃ ) bezüglich des geraden Teils der Schneidkante erstrecken.

## Revendications

1. Plaquette de coupe ayant :
une arête de coupe (10),
des nez (2) formés sur ladite plaquette,
un plateau central (5),
une gorge de cassure de copeau (3) formée entre ladite arête de coupe (10) et ledit plateau central (5),
des saillies de cassure de copeau (6) s'étendant à partir dudit plateau central vers chacun desdits nez (2) et ayant une extrémité effilée (9a),
des parois de cassure de copeau (7) à l'avant desdites saillies de cassure (6), et
une élévation formée dans ladite gorge de cassure (3) près de chacun desdits nez (2) de ladite plaquette,
caractérisée en ce que :
des gorges ellipsoïdales (9) sont formées dans le fond (3a) de ladite gorge de cassure (3) de façon à être en continuité desdites parois de cassure (7),
ladite élévation comprend deux rampes (4) s'étendant obliquement et symétriquement l'une par rapport à l'autre et par rapport à la bissectrice du nez (2) de manière à définir une crête entre les rampes (4),
ladite crête s'étendant le long de la bissectrice, et
chaque rampe (4) présente un angle d'inclinaison de 5 à 20 degrés par rapport à un plan principal de la plaquette.

2. Plaquette de coupe suivant la revendication 1, dans laquelle ladite crête comporte une partie plate étroite le long de son arête supérieure.

3. Plaquette de coupe suivant la revendication 1, dans laquelle ladite crête comporte, le long de son arête supérieure, une surface courbe ayant un petit rayon de courbure.

4. Plaquette de coupe suivant une quelconque des revendications 1 à 3, dans laquelle ladite saillie a une extrémité ayant un petit rayon de courbure, et elle présente des lignes de crête en continuité de la dite extrémité et s'étendant suivant un angle ϑ₂ (compris entre 1° et la moitié de l'angle de nez) par rapport à la partie rectiligne de ladite arête de coupe.

5. Plaquette de coupe suivant une quelconque des revendications 1 à 3, dans laquelle chaque dite saillie de cassure a un angle de pointe plus petit que l'angle de nez, de 2 ϑ₃(ϑ₃ = -5 à 10° environ),et elle présente des lignes de crête en continuité de son extrémité et s'étendant suivant un angle ϑ₂ (>ϑ₃) par rapport à la partie rectiligne de ladite arête de coupe.
